# EUROPEAN PATENT SPECIFICATION

(11) **EP 4 246 007 B1**
(45) Date of publication and mention of the grant of the patent: **23.04.2025**
(21) Application number: 21950404.0
(22) Date of filing: 19.07.2021
(51) Int. Cl.: F16D 23/04, F16D 13/24

(54) **CONE CLUTCH AND TRANSMISSION**
KEGELKUPPLUNG UND GETRIEBE
EMBRAYAGE À CÔNE ET TRANSMISSION

(43) Date of publication of application: 20.09.2023
(73) Proprietor: Wuxi InfiMotion Technology Co., Ltd., Wuxi, Jiangsu 214181 (CN)
(72) Inventor: QIU, Zhiling, Hangzhou, Zhejiang 310051 (CN); SUN, Yan, Hangzhou, Zhejiang 310051 (CN); FU, Jun, Hangzhou, Zhejiang 310051 (CN); TAN, Yanjun, Hangzhou, Zhejiang 310051 (CN); LIN, Xiaozhe, Hangzhou, Zhejiang 310051 (CN); WANG, Ruiping, Hangzhou, Zhejiang 310051 (CN); SCHOLTEN, Ingo, Hangzhou, Zhejiang 310051 (CN)
(74) Representative: Kraus & Lederer PartGmbB
(86) International application number: PCT/CN2021/107125
(87) International publication number: WO 2023/000138

(56) References cited:
- EP-A2- 1 273 825
- CN-A- 1 483 111
- CN-A- 103 388 656
- CN-A- 107 975 544
- CN-A- 110 816 261
- DE-A1- 102012 220 563
- DE-A1- 102018 111 248
- US-A1- 2008 017 470
- US-A1- 2008 017 470
- US-A1- 2012 217 115

## Description

The present invention relates to the field of vehicle transmissions, and more particularly, to a cone clutch and a transmission.

### BACKGROUND

**In** recent years, electric vehicles are rapidly developed due to less environmental pollution. At present, most of the electric vehicles are driven by a motor through single-speed reducers. Because of a great speed variation, the motor is required to operate over a great range typically ranging from 0 to 14,000 rpm. As restricted by the existing manufacturing technology, a high-speed motor has high cost, and both the motor and a battery have great power. As a result, the existing electric vehicle has higher cost than a conventional fuel vehicle.

When an output torque of a transmission is increased by using a multi-speed transmission with a large reduction ratio at a low speed, and a rotation speed of the motor is reduced by using the multi-speed transmission with a small reduction ratio at a high speed, it is possible to increase an acceleration quality of vehicle power while reducing an operating speed of the motor, thereby lowering the cost of the motor. However, for electric vehicle manufacturers, the multi-speed transmission is more complex than the single-speed reducer. A conventional multi-speed transmission need a clutch, a brake, or a synchronizers to shift, and these traditional transmission components are all required to be controlled by means of complex actuators. A conventional clutch actuator has an electro-hydraulic controlled hydraulic cylinder and a motor-controlled drum shift fork mechanism. For example, DE Patent Application No. 102018111248A1 discloses a synchronous clutch for coupling an auxiliary unit to an internal combustion engine including a first coupling component and a second coupling component, which can be coupled to one another via two friction ring sets. US Patent Publication No. 2012/217115A1 discloses a ring of a synchronizing device of a vehicle transmission including a friction surface that interacts with a friction surface of another ring of the synchronizing device and at least one slide surface configured to slidably seat on an abutment surface of the synchronizing device. US Patent Publication No. 2008/017470A1 discloses a synchronization device for a change speed gear, including at least one cone clutch which comprises a double cone ring freely rotatable relative to a hub between an inner friction ring and an outer synchronizing ring. EP Patent Application No. 02291490.7 discloses a gearbox with parallel shafts comprising a primary shaft and at least one secondary shaft supporting several fixed teeth and several idle gears which mesh with the latter and which can be linked in rotation with their shaft by means of coupling when engaging a gear.

The electro-hydraulic proportional-controlled hydraulic oil cylinder can accurately control a torque of the clutch or a torque of the brake to enable a driving torque of a vehicle to be not interrupted during the shifting, and thus the shifting is smooth. However, it is necessary for this type of hydraulic actuator to be supplied with an actuating force by a hydraulic pump, a proportional pressure solenoid valve, a valve plate, and a hydraulic oil cylinder. Moreover, these parts have high cost and great power consumption, and are thus more suitable for a case where a common oil pump is shared by a plurality of clutches. For an electric vehicle transmission with only one or two clutches or brakes, such a hydraulic actuator is less suitable due to the cost and power consumption of the hydraulic pump. The motor-controlled drum shift fork mechanism is realized by using a control motor, a drum, a shift fork, and a synchronizer, and has cost and power consumption lower than the hydraulic actuator. However, the motor-controlled drum shift fork mechanism has power interruption during its shifting, and thus has poor shifting smoothness. Therefore, how to reduce cost and energy consumption of a shift mechanism of the electric vehicle transmission and ensure the shifting smoothness is an urgent technical problem to be solved.

### SUMMARY

The present invention is set out in the appended set of claims.

### BRIEF DESCRIPTION OF THE DRAWINGS

Some specific embodiments of the present invention will hereinafter be described in detail with reference to the accompanying drawings that are exemplary merely, rather than limiting the present invention. In the accompanying drawings, same or similar components or parts are denoted by same reference numerals. It should be understood by those skilled in the art that these accompanying drawings are not necessarily drawn to scale, in which:
FIG. 1 is a cross-sectional view of a cone clutch according to an embodiment of the present invention;
FIG. 2 is a cross-sectional view of a transmission according to an embodiment of the present invention;
FIG. 3 is a partially enlarged view at part A illustrated in FIG. 2;
FIG. 4 is a cross-sectional view taken along line B-B illustrated in FIG. 2;
FIG. 5 is a schematic principle view of a transmission according to an embodiment of the present invention;
FIG. 6 is a schematic view of a radial arrangement of the transmission shown in FIG. 5; and
FIG. 7 is a schematic principle view of a transmission according to another embodiment of the present invention.

### DETAILED DESCRIPTION

Exemplary embodiments of the present invention will be described in more detail below with reference to the accompanying drawings. While the exemplary embodiments of the present invention are illustrated in the accompanying drawings, it should be understood that the present invention may be embodied in various forms and should not be construed as being limited to the embodiments set forth herein. Instead, these embodiments are provided for a complete and thorough understanding of the present invention, and can fully convey the scope of the present invention to those skilled in the art.

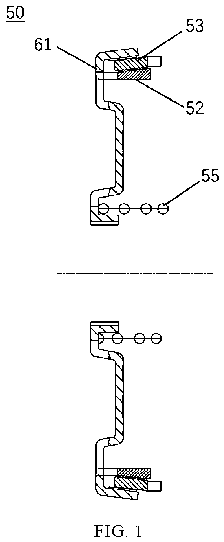

FIG. 1 is a cross-sectional view of a cone clutch 50 according to an embodiment of the present invention. As illustrated in FIG. 1, in an embodiment, the cone clutch 50 includes a middle cone ring 53, an inner cone ring 52, and an outer ring 61. The middle cone ring 53 has an inner ring surface and an outer ring surface, and each of the inner ring surface and the outer ring surface is a conical surface. The inner cone ring 52 is disposed on an inner side the middle cone ring 53 and has an outer ring surface. The outer ring surface of the inner cone ring 52 is a conical surface matching with the inner ring surface of the middle cone ring 53. The outer ring 61 has a conical ring surface matching with the outer ring surface of the middle cone ring 53. The outer ring 61 is movable relative to the inner cone ring 52 in an axial direction of the conical ring surface. The middle cone ring 53 and the outer ring 61 are connected to two to-be-engaged members, respectively. The cone clutch 50 is configured to engage the two to-be-engaged members by forming friction pairs in close contact between the outer ring 61 and the middle cone ring 53 and between the middle cone ring 53 and the inner cone ring 52 when the outer ring is subject to a thrust for urging the outer ring 61 towards the middle cone ring 53. For example, the two to-be-engaged members are a shaft and a gear on the shaft.

According to the present invention, the clutch with the friction pairs having two conical ring surfaces is constructed by the middle cone ring 53, the inner cone ring 52, and the outer ring 61. By controlling the axial movement of the outer ring 61, it is possible to control engagement and disengagement of the cone clutch 50, thereby engaging or disengaging the to-be-engaged member. The arrangement of two sets of friction pairs with the conical ring surfaces can reduce the control force of the clutch and enhance the torque capability of the clutch. The cone clutch 50 according to the embodiments is particularly suitable for a transmission with less gears and small-and-medium power.

Further, cone angles of the middle cone ring 53, the inner cone ring 52, and the outer ring 61 may be reasonably set to better amplify an axial force of the clutch. For example, if the cone angle is defined as α and the axial force of the clutch is defined as Fa, a positive pressure on the conical surface is Fn=Fa/tan(α). When the cone angle α is 7°, Fn=8.14*Fa, which is equivalent to amplifying the axial force of the clutch by more than 8 times. For a cone ring with a radius of 60 mm, an axial force of 3 kN may generate a friction torque of 300 Nm.

As illustrated in FIG. 1, in an embodiment, the cone clutch 50 further includes a reset spring 55. An end of the reset ring 55 is fixed, and the other end of the reset ring 55 is connected to the outer ring 61. The reset spring 55 is configured to automatically reset the outer ring 61. That is, when a force for urging the outer ring 61 towards the middle cone ring 53 is removed on the outer ring 61, by the reset spring 55, the outer ring 61 is restored back to its original state in which the outer ring 61 is not engaged with the middle cone ring 53.

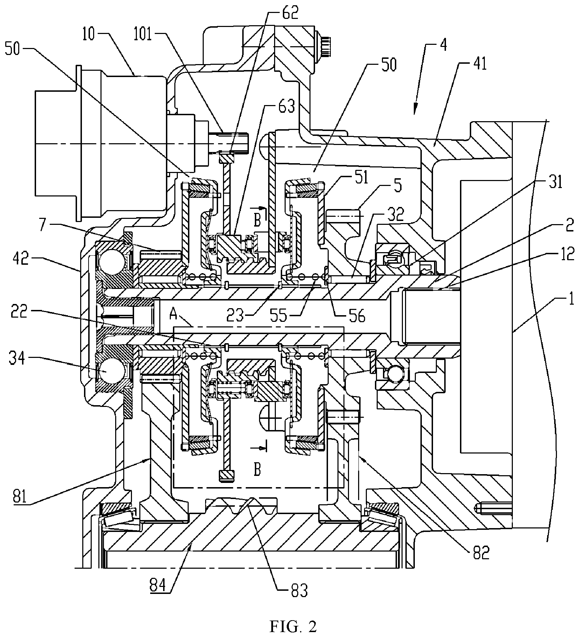

The present invention further provides a transmission. FIG. 2 is a cross-sectional view of a transmission according to an embodiment of the present invention. As illustrated in FIG. 2, in an embodiment, the transmission includes a rotary shaft, a target gear, and the cone clutch 50 according to any one of the above embodiments. The target gear is sleeved over the rotary shaft and rotatable relative to the rotary shaft. The cone clutch 50 is configured to engage or disengage the rotary shaft and the target gear. That is, the rotary shaft and the target gear are the two to-be-engaged members as described above. The rotary shaft herein may be any one of an input shaft 2, an intermediate shaft, and/or a transmission output shaft 84, or a combination thereof, as long as the rotary shaft is a shaft for which the clutch is required.

According to the embodiments, the transmission includes two clutches with friction pairs having conical ring surfaces. By controlling the axial movement of the outer ring 61, it is possible to control the engagement and disengagement of the cone clutch 50, thereby engaging or disengaging the to-be-engaged members. The arrangement of two sets of friction pairs with the conical ring surfaces can reduce the control force of the clutch and enhance the torque capability of the clutch.

In an embodiment, the target gear is disposed at the rotary shaft through a support bearing 32, which enables the target gear to rotate relative to the rotary shaft.

As illustrated in FIG. 2, the transmission further includes a gear coupling disc 51. The gear coupling disc 51 is fixedly connected to the target gear. The middle cone ring 53 is connected to the gear coupling disc 51 through a latch in an anti-relative rotation manner, and is slidable axially relative to the gear coupling disc 51. The inner ring 52 is connected to the outer ring 61 through a latch in an anti-relative rotation manner. An end of the inner ring 52 abuts against the gear coupling disc 51 to avoid an axial movement of the inner ring 52 when the clutch is engaged. The outer ring 61 is sleeved over the rotary shaft, and connected to the rotary shaft in an anti-relative rotation manner. That is, the cone clutch 50 is interposed between the rotary shaft and the target gear. With this arrangement, the rotary shaft rotates synchronously with the outer ring 61. When the cone clutch 50 is engaged, the rotary shaft can synchronously drive the target gear to rotate through the cone clutch 50.

In an embodiment, a latch is disposed on a side of the middle cone ring 53 close to the gear coupling disc 51, and the latch protrudes in an axial direction of the middle cone ring 53. A first groove is formed at the gear coupling disc 51, and the latch is engaged into the first groove. Relative rotation between the middle conical ring 53 and the gear coupling disc 51 can be avoided by the arrangement of the latch and the first groove.

In an embodiment, the outer ring 61 is connected to the rotary shaft through a spline key 22, thus avoid a relative rotation therebetween. Meanwhile, the outer ring 61 may also be movable axially relative to the rotary shaft.

Further, in an embodiment, the cone clutch 50 includes a reset spring 55. In this case, the transmission further includes a retainer ring 56 sleeved over the rotary shaft. The retainer ring 56 has a side in contact with the target gear and another side abutting against the reset spring 55. The retainer ring 56 is configured to restrict an axial displacement of the target gear, and further provides an abutting surface for an end of the reset spring 55. The cone clutch 50 can automatically be restored by the arrangement of the reset spring 55.

Further, in an embodiment, as illustrated in FIG. 2, the transmission further includes a circlip 23 sleeved over the rotary shaft and located at a side of the outer ring 61 away from the reset spring 55. The circlip 23 is configured to restrict an axial displacement of the outer ring 61.

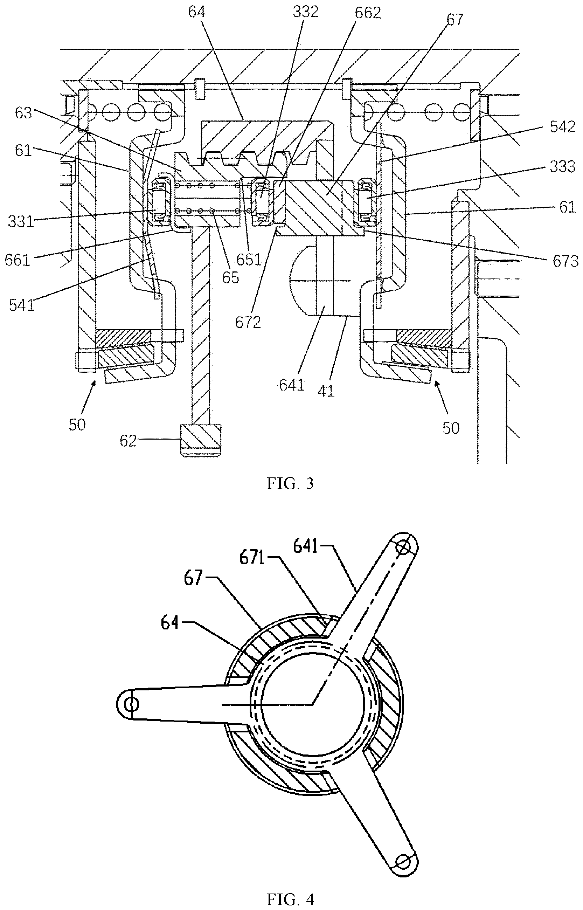

FIG. 3 is a partially enlarged view at part A illustrated in FIG. 2. As illustrated in FIG. 2 and FIG. 3, in an embodiment, the transmission further includes an actuator. The actuator includes a motor 10, a second gear 62, a nut 63, and a screw 64. A first gear 101 is disposed on an output shaft of the motor 10. The first gear 101 may be a gear sleeved over on the output shaft of the motor 10 or a gear machined on the output shaft of the motor 10. The second gear 62 is meshed with the first gear 101. The second gear 62 is sleeved over an outer surface of the nut 63. The screw 64 forms a screw pair with an inner wall of the nut 63. The screw 64 is fixedly connected to a housing of the transmission to enable the nut 63 to be axially displaced to generate a thrust directly or indirectly acting on the outer ring 61 when the second gear 62 and the nut 63 are driven by the motor 10 to rotate relative to the screw 64. Optionally, a speed ratio of the first gear 101 to the second gear 62 is any value from 10 to 20, such as 10, 15, or 20. When the speed ratio of the first gear 101 to the second gear 62 is 15, an output torque of 0.8 Nm of the motor 10 is sufficient to generate an axial force of 3 kN or more for the engagement of the clutch.

When the torque is output from the motor 10, power is transmitted to the nut 63 through the gear pair. As the screw 64 is fixed, the nut 63 then rotates relative to the screw 64 and generates an axial displacement, thereby urging the cone clutch 50 for the engagement or the disengagement. Certainly, in other embodiments, the nut 63 may also be fixed, and the screw 64 is driven by the motor 10 through the gear pair, which is also capable of outputting an axial thrust.

According to this embodiment, the transmission further includes the actuator, which is driven by the gear pair and the screw pair. Since a driving force may be amplified by the gear pair, the screw pair, and the friction pairs with the conical surfaces, the engagement of the cone clutch 50 may be controlled by means of a small motor 10. For example, a driving torque of 10 Nm may be converted into an axial force of 2500 N by means of one screw pair. A simple pair of gear reducers may amplify the output torque of the motor 10 by a factor of ten or more. A small motor 10 with two hundred watts may transmit a torque of 300Nm by means of a simple gear reducer, a pair of screw pairs, and two friction conical surfaces, thereby satisfying requirement for driving power of a general electric vehicle. As a result, a motor 10 with an operating torque of smaller than 1Nm is enough to drive the cone clutch 50 of 350Nm.

Further, since the screw pair between the nut 63 and the screw 64 is self-locking, it is possible to lock the screw pair in an engagement position after the cone clutch 50 is engaged, at which point the motor 10 may be disconnected and no more electrical energy is consumed. That is, compared to an existing hydraulic actuator, the actuator according to this embodiment can save power consumption, thereby improving the efficiency of the transmission.

Further, a conventional automotive transmission clutch is generally a multi-plate and wet clutch, and its actuator is an electro-hydraulically controlled hydraulic cylinder. Such the actuator includes a hydraulic pump, a hydraulic cylinder, a proportional pressure solenoid valve, and a valve plate. Therefore, only the motor 10 is required for a power source of the actuator in this embodiment, thereby lowering manufacturing cost of the actuator.

In other embodiments, the screw pair formed by the nut 63 and the screw 64 in the actuator may be replaced with a ball screw (not shown), thereby reducing frictional resistance and saving control power.

Further, in an embodiment, the transmission further includes a first buffer assembly disposed between the nut 63 of the actuator and the outer ring 61. The first buffer assembly includes a radial positioning ring 661, a first thrust bearing 331, and a first spring diaphragm 541 that sequentially abut against each other. A side of the radial positioning ring 661 away from the first thrust bearing 331 abuts against the nut 63 to restrict a radial displacement of the first thrust bearing 331. A side of the first spring diaphragm 541 away from the first thrust bearing 331 abuts against the outer ring 61 of the cone clutch 50 at a side where the first spring diaphragm 541 is located. The first spring diaphragm 541 is disposed between the first thrust bearing 331 and the outer ring 61, and serves to buffer an impact of the nut 63 to avoid an impact of the clutch during its engagement.

In an embodiment, a plurality of cone clutches 50, a plurality of actuators, and a plurality of first buffer assemblies are provided and are same in quantity. The plurality of cone clutches 50 is arranged in one-to-one correspondence with the plurality of actuators and the plurality of first buffer assemblies. That is, only one actuator can drive the corresponding one of the plurality of cone clutches, with one first buffer assembly interposed therebetween.

As illustrated in FIG. 2, in an embodiment, two cone clutches are provided. The outer rings 61 of the two cone clutches 50 are located at two sides of the nut 63, respectively. The motor 10 is configured to output forward torque and backward torque to enable the two cone clutches 50 to share one actuator.

In another embodiment, as illustrated in FIG. 3, the transmission further includes a first buffer assembly, a second buffer assembly, and an anti-loosening spring 65. The first buffer assembly and the second buffer assembly are located at two sides of the nut 63 in an axial direction of the nut 63, respectively. The anti-loosening spring 65 is disposed in an axial through hole of the nut 63, and has two ends respectively abutting against the first buffer assembly and the second buffer assembly.

In an embodiment, as illustrated in FIG. 3, the first buffer assembly includes a radial positioning ring 661, a first thrust bearing 331, and a first spring diaphragm 541 that sequentially abut against each other. A side of the radial positioning ring 661 away from the first thrust bearing 331 abuts against the nut 63 and is connected to an end of the anti-loosening spring 65, to restrict a radial displacement of the first thrust bearing 331. A side of the first spring diaphragm 541 away from the first thrust bearing 331 abuts against the outer ring 61 of the cone clutch 50 at a side where the first spring diaphragm 541 is located. In an embodiment, the radial positioning ring 661 is substantially in a "Z" shape and has two radial surfaces that respectively abut against the first thrust bearing 331 and the nut 63, thereby radially positioning the first thrust bearing 331.

In an embodiment, as illustrated in FIG. 3, the second buffer assembly includes a second thrust bearing 332, a gasket 662, a transition ring 67, a third thrust bearing 333, and a second spring diaphragm 542 that sequentially abut against each other in an axial direction of the rotary shaft. An end surface of the second thrust bearing 332 away from the gasket 662 is connected to the anti-loosening spring 65. A side of the second spring diaphragm 542 away from the transition ring 67 abuts against the outer ring 61 of the cone clutch 50 at a side where the second spring diaphragm 542 is located.

The anti-loosening spring is configured to allow a predetermined pre-tightening force to be always generated between various components of the second buffer assembly, thus reducing noise during the shifting.

Further, in an embodiment, as illustrated in FIG. 3, a second groove 651 is formed at an end surface of the nut 63 away from the first buffer assembly. The second groove 651 radially penetrates an outer ring surface of the nut 63. Both the second thrust bearing 332 and the gasket 662 are disposed within the second groove 651, and are engaged with a bottom surface of the second groove 651 in a radial direction of the second groove 651, thereby restricting radial displacements of the second thrust bearing 332 and the gasket 662.

As illustrated in FIG. 3, further, in an embodiment, a first boss 672 and a second boss 673 are disposed on two sides of the transition ring 67 in an axial direction of the transition ring 67, respectively. The first boss 672 is engaged with a circumferential surface of the gasket 662 to restrict a radial displacement of the transition ring 67. The second boss 673 is engaged with a circumferential surface of the third thrust bearing 333 to restrict a radial displacement of the third thrust bearing 333.

In this embodiment, the radial positioning is based on the nut 63 to sequentially restrict the radial displacement of each of the second thrust bearing 332, the gasket 662, the transition ring 67, and the third thrust bearing 333. In other embodiments, other radial positioning manners may be used, for example, by providing radial engagement features on the screw 64 and the transition ring 67, using the screw 64 to radially position the transition ring 67, which in turn positions the second thrust bearing 332 and the third thrust bearing 333.

FIG. 4 is a cross-sectional view taking along line B-B illustrated in FIG. 2. As illustrated in FIG. 2 and FIG. 4, in this embodiment, the screw 64 has a plurality of connection arms 641. Each of the plurality of connection arms 641 is fixedly connected to the housing of the transmission.

Further, in an embodiment, the plurality of connection arms 641 is evenly arranged in a circumferential direction of the screw 64. Each of the plurality of connection arms 641 protrudes from the screw 64 in a radial direction of the screw 64. Accordingly, it is necessary for the transition ring 67 to have a plurality of radial through groove 671 to allow each of the connection arms to pass therethrough.

It should be noted that, due to assembly requirement, the through groove 671 should also perpetrate an axial side of the transition ring 67 to facilitate an axial assembly between the transition ring 67 and the screw 64. In this case, a plurality of grooves is formed at an end surface of the transition ring 67 in an axial direction of the transition ring 67. The plurality of grooves may be covered with a gasket 662 disposed on this end surface, thereby facilitating abutment of the thrust bearing (the second thrust bearing 332 in the embodiment of FIG. 2) to realized more stable force transmission.

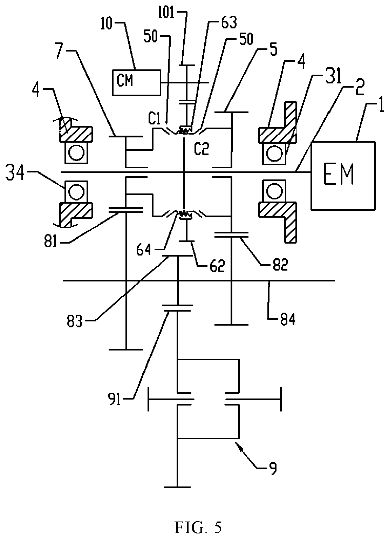

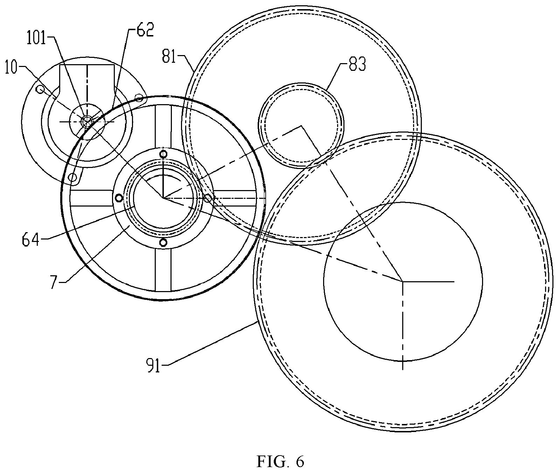

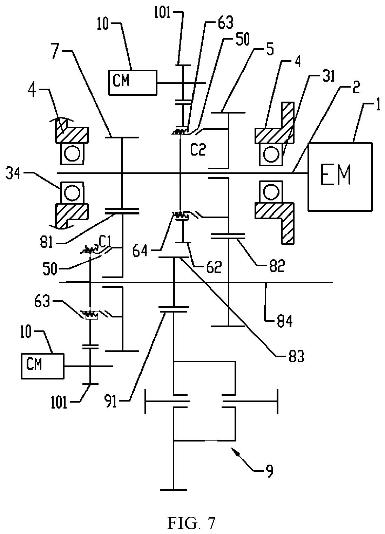

FIG. 5 is a schematic principle view of a transmission according to an embodiment of the present invention. FIG. 6 is a schematic view of a radial arrangement of the transmission of FIG. 5. FIG. 7 is a schematic principle view of a transmission according to another embodiment of the present invention. As can be seen in FIG. 5 and FIG. 7, in the present invention, it is possible for one actuator to control one cone clutch 50 alone (see FIG. 7), and it is also possible for one actuator to provide two adjacent cone clutches 50 with braking power simultaneously (see FIG. 5). For example, in some embodiments, two cone clutches 50, two actuators, and two first buffer assemblies are provided, and the two cone clutch 50 are arranged in one-to-one correspondence with the two actuators and the two first buffer assemblies. Thus, it is possible to control one cone clutch 50 by one actuator individually. When one actuator is shared by the two cone clutches 50, there is a short (tens of milliseconds) power interruption during the shifting, which is not normally felt. When one cone clutch 50 is controlled by one actuator alone, an unpowered interruption can be achieved, and thus the shifting is smoother.

In an embodiment, the rotary shaft includes a transmission input shaft 2 and/or a transmission output shaft 84. In other words, it is possible to provide one cone clutch 50 on the transmission input shaft 2 (see FIG. 5) or on the transmission output shaft 84, or to provide the cone clutch 50 on each of the input shaft 2 and the transmission output shaft 84 (see FIG. 7). The cone clutch may be arranged as required. For example, separate cone clutches 50 are provided for different rotary shafts depending on a space arrangement requirement. Certainly, for some transmissions having an intermediate shaft, the cone clutch 50 may also be disposed on the intermediate shaft. At least two sets of variable gears are provided on the transmission input shaft 2 and the transmission output shaft 84, and the target gears are all driving gears on the transmission input shaft 2 or all driven gears on the transmission output shaft 84; or the target gears are at least one driving gear on the transmission input shaft 2 and a driven gear, in no mesh with the at least one driving gear, on the transmission output shaft 84.

In an embodiment, as illustrated in FIG. 2 or FIG. 5, the transmission input shaft 2 is connected to an output shaft of a prime motor 1, for example, through the spline key 12. Two ends of the transmission input shaft 2 may be supported on a front housing 41 and a rear housing 42 by a first bearing 31 and a second bearing 34, respectively. Two sets of variable gears are provided on the transmission input shaft 2 and the transmission output shaft 84. An output gear 83 is further provided on the transmission output shaft 84 and is connected to a differential 9. In some embodiments, a first driving gear 7 and a second driving gear 5 are provided on the transmission input shaft 2. Moreover, a first driven gear 81 and a second driven gear 82 are provided on the transmission output shaft 84, and are meshed with the first driving gear 7 and the second driving gear 5, respectively. The first driving gear 7 and the first driven gear are formed into a low-speed gear pair, and the second driving gear 5 and the second driven gear are formed into a high-speed gear pair. One cone clutch 50 is connected in series between the first driving gear 7 and the transmission input shaft 2, and one cone clutch 50 is connected in series between the second driving gear 5 and the transmission input shaft 2. By engagement or disengagement of the two cone clutches 50, power from the transmission input shaft 2 is transmitted to the first driving gear 7 or the second driving gear 5. A common actuator is provided between the two cone clutches 50. The output gear 83 is further provided on the transmission output shaft 84. The output gear 83 (equivalent to a driving gear of the differential 9) is meshed with a differential gear 91 of the differential 9 to transmit the power to wheels through the differential 9 and a half shaft. Such a two-speed transmission is particularly suitably used as a transmission for an electric vehicles of not too great power.

During operation, when the motor 10 is in its neutral operation position, the nut 63 is also in its neutral position of the stroke. At this time, the outer rings 61 of the cone clutches 50 at both sides are disengaged from the middle cone ring 53, and thus the transmission is in neutral gear. When the motor 10 outputs the forward torque to move the nut 63 leftwards, an axial pressure is exerted on the outer ring 61 of the left cone clutch 50 by the nut 63 through the radial positioning ring 661, the first thrust bearing 331, and the first spring diaphragm 541. Since the gear coupling disc 51 can avoid the axial movement of the inner cone ring 52, the outer ring 61 urges the middle cone ring 53 to be pressed against the inner cone ring 52 to generate friction torque at both the inner ring surface and outer ring surface 61 of the middle cone ring 53, thereby engaging the cone clutch 50. As a result, the power from the transmission input shaft 2 is transmitted to the first driving gear 7 at the left side of the actuator to allow the transmission to operate in low gear. After the cone clutch 50 is engaged, the motor 10 is controlled to be disconnected and is self-locking by means of the screw pair. When the vehicle needs to be shifted into high-speed gear, the motor 10 is controlled to output the backward torque, and the nut 63 is returned back to its neutral position. In this case, the left cone clutch 50 is disengaged under the action of its own reset spring 55. The motor 10 then is further controlled to output the backward torque to move the nut 63 rightwards to engage the right cone clutch 50. As a result, the power from the transmission input shaft 2 is transmitted to the second driving gear 5, and then is output.

## Claims

1. A cone clutch (50), comprising:
a middle cone ring (53) having an inner ring surface and an outer ring surface, each of the inner ring surface and the outer ring surface being a conical surface;
an inner cone ring (52) disposed on an inner side of the middle cone ring (53) and having an outer ring surface, the outer ring surface of the inner cone ring (52) being a conical surface matching with the inner ring surface of the middle cone ring (53); and
an outer ring (61) having a conical ring surface matching with the outer ring surface of the middle cone ring (53), wherein:
the outer ring (61) is movable relative to the inner cone ring (52) in an axial direction of the conical ring surface;
the middle cone ring (53) and the outer ring (61) are connected to two to-be-engaged members, respectively; and
the cone clutch (50) is configured to engage the two to-be-engaged members by forming friction pairs in close contact between the outer ring (61) and the middle cone ring (53) and between the middle cone ring (53) and the inner cone ring (52) when the outer ring (61) is subject to a thrust for urging the outer ring (61) towards the middle cone ring (53),
**characterised in that** the cone clutch (50) further comprises a reset spring (55), an end of the reset spring (55) being fixed, and another end of the reset spring (55) being connected to the outer ring (61).

2. A transmission, comprising:
a rotary shaft;
a target gear sleeved over the rotary shaft and rotatable relative to the rotary shaft; and
the cone clutch (50) according to claim 1, the cone clutch (50) being configured to engage or disengage the rotary shaft and the target gear.

3. The transmission according to claim 2, wherein the target gear is disposed at the rotary shaft through a support bearing (32).

4. The transmission according to claim 2, further comprising a gear coupling disc (51) fixedly connected to the target gear, the gear coupling disc (51) being connected to the middle cone ring (53) in an anti-relative rotation manner,
wherein the outer ring (61) is sleeved over the rotary shaft, and is connected to the rotary shaft in an anti-relative rotation manner.

5. The transmission according to claim 4, wherein:
a latch is disposed on a side of the middle cone ring (53) close to the gear coupling disc (51), the latch protruding in an axial direction of the middle cone ring (53), and a first groove is formed at the gear coupling disc (51), the latch being engaged into the first groove; or
the outer ring (61) is connected to the rotary shaft through a spline key (22).

6. The transmission according to claim 4, wherein:
the cone clutch (50) comprises a reset spring (55); and
the transmission further comprises a retainer ring (56) sleeved over the rotary shaft, the retainer ring (56) having a side in contact with the target gear and another side abutting against the reset spring (55).

7. The transmission according to claim 6, further comprising a circlip (23) sleeved over the rotary shaft and located at a side of the outer ring (61) away from the reset spring (55), the circlip (23) being configured to restrict an axial displacement of the outer ring (61).

8. The transmission according to any one of claims 3 to 6, further comprising an actuator, the actuator comprising:
a motor (10), a first gear (101) being disposed on an output shaft of the motor (10);
a second gear (62) meshed with the first gear (101);
a nut (63), the second gear (62) being sleeved over an outer surface of the nut (63); and
a screw (64) forming a screw pair with an inner wall of the nut (63), the screw (64) being fixedly connected to a housing of the transmission to enable the nut (63) to be axially displaced to generate a thrust directly or indirectly acting on the outer ring (61) when the second gear (62) and the nut (63) are driven by the motor (10) to rotate relative to the screw (64).

9. The transmission according to claim 8, further comprising a first buffer assembly disposed between the nut (63) of the actuator and the outer ring (61), the first buffer assembly comprising a radial positioning ring (661), a first thrust bearing (331), and a first spring diaphragm (541) that sequentially abut against each other, wherein:
a side of the radial positioning ring (661) away from the first thrust bearing (331) abuts against the nut (63) to restrict a radial displacement of the first thrust bearing (331); and
a side of the first spring diaphragm (541) away from the first thrust bearing (331) abuts against an outer ring (61) of a cone clutch (50) at a side where the first spring diaphragm (541) is located,
a plurality of cone clutches (50), a plurality of actuators, and a plurality of first buffer assemblies are provided and are same in quantity, and the plurality of cone clutches (50) is arranged in one-to-one correspondence with the plurality of actuators and the plurality of first buffer assemblies.

10. The transmission according to claim 8, wherein:
two cone clutches (50) are provided, outer rings (61) of the two cone clutches (50) being located at two sides of the nut (63), respectively; and
the motor (10) is configured to output forward torque and backward torque to enable the two cone clutches (50) to share one actuator.

11. The transmission according to claim 10, further comprising:
a first buffer assembly and a second buffer assembly that are located at two sides of the nut in an axial direction of the nut (63), respectively; and
an anti-loosening spring (65) disposed in an axial through hole of the nut (63) and having two ends respectively abutting against the first buffer assembly and the second buffer assembly.

12. The transmission according to claim 11, wherein:
the first buffer assembly comprises a radial positioning ring (661), a first thrust bearing (331), and a first spring diaphragm (541) that sequentially abut against each other;
a side of the radial positioning ring (661) away from the first thrust bearing (331) abuts against the nut (63) and is connected to an end of the anti-loosening spring (65), to restrict a radial displacement of the first thrust bearing (331); and
a side of the first spring diaphragm (541) away from the first thrust bearing (331) abuts against the outer ring (61) of one of the two cone clutches (50) at a side where the first spring diaphragm (541) is located.

13. The transmission according to claim 11, wherein:
the second buffer assembly comprises a second thrust bearing (332), a gasket (662), a transition ring (67), a third thrust bearing (333), and a second spring diaphragm (542) that sequentially abut against each other in an axial direction of the rotary shaft;
an end surface of the second thrust bearing (332) away from the gasket (662) is connected to the anti-loosening spring (65); and
a side of the second spring diaphragm (542) away from the transition ring (67) abuts against the outer ring (61) of one of the two cone clutches (50) at a side of the second spring diaphragm (542) is located,
a second groove (651) is formed at an end surface of the nut (63) away from the first buffer assembly, the second groove (651) radially penetrating an outer ring surface of the nut (63), and both the second thrust bearing (332) and the gasket (662) are disposed within the second groove (651) and are engaged with a bottom surface of the second groove (651) in a radial direction of the second groove (651),
a first boss (672) and a second boss (673) are disposed on two sides of the transition ring (67) in an axial direction of the transition ring (67), respectively, the first boss (672) being engaged with a circumferential surface of the gasket (662) to restrict a radial displacement of the transition ring (67), and the second boss (673) being engaged with a circumferential surface of the third thrust bearing (333) to restrict a radial displacement of the third thrust bearing (333).

14. The transmission according to claim 8, wherein the screw (64) has a plurality of connection arms (641), each of the plurality of connection arms (641) being fixedly connected to the housing of the transmission,
the plurality of connection arms (641) is evenly arranged in a circumferential direction of the screw (64), and each of the plurality of connection arms (641) protrudes from the screw (64) in a radial direction of the screw (64).

## Patentansprüche

1. Konuskupplung (50), umfassend:
einen mittleren Konusring (53), dessen innere und äußere Ringflächen beide Konusflächen sind;
einen inneren Konusring (52), der an der Innenseite des mittleren Konusrings (53) angeordnet ist, wobei eine äußere Ringfläche des inneren Konusrings (52) eine Konusfläche ist, die zur inneren Ringfläche des mittleren Konusrings (53) passt; sowie
einen äußeren Ring (61), der eine mit der äußeren Ringfläche des mittleren Konusrings (53) übereinstimmende konische Ringfläche aufweist,
wobei der äußere Ring (61) relativ zu dem inneren Konusring (52) in einer axialen Richtung der konischen Ringfläche beweglich ist,
wobei der mittlere Konusring (53) und der äußere Ring (61) jeweils mit zwei einzukuppelnden Elementen verbunden sind,
wobei die Konuskupplung (50) so konfiguriert ist, dass, wenn der äußere Ring (61) einem Schub ausgesetzt ist, der den äußere Ring (61) in Richtung des mittleren Konusrings (53) drängt, die zwei einzukuppelnden Elemente dadurch einzukuppeln, dass Reibungspaaren in engem Kontakt zwischen dem äußeren Ring (61) und dem mittleren Konusring (53) sowie zwischen dem mittleren Konusring (53) und dem inneren Konusring (52) gebildet werden,
**dadurch gekennzeichnet, dass** die Konuskupplung (50) ferner eine Rückstellfeder (55) umfasst, wobei ein Ende der Rückstellfeder (55) fest angeordnet ist, und wobei das andere Ende der Rückstellfeder (55) mit dem äußeren Ring (61) verbunden ist.

2. Getriebe, umfassend
eine Drehwelle,
ein Zielzahnrad, das auf die Drehwelle aufgesetzt wird und relativ zur Drehwelle drehbar ist; und
eine Konuskupplung (50) nach Anspruch 1, wobei die Konuskupplung (50) so konfiguriert ist, dass sie die Drehwelle und das Zielzahnrad ein- oder auskuppelt.

3. Getriebe nach Anspruch 2, wobei das Zielzahnrad über ein Stützlager (32) an der Drehwelle angeordnet ist.

4. Getriebe nach Anspruch 2, ferner eine Zahnradkupplungsscheibe (51) umfassend, die fest mit dem Zielzahnrad und drehfest mit dem mittleren Konusring (53) verbunden ist,
wobei der äußere Ring (61) auf die Drehwelle aufgesetzt wird und die beiden eine drehfeste Verbindung bilden.

5. Getriebe nach Anspruch 4, wobei eine nahe der Zahnradkupplungsscheibe (51) liegende Seite des mittleren Konusrings (53) mit einem Rastzahn versehen ist, der entlang der axialen Richtung des mittleren Konusrings hervorsteht, und wobei die Zahnradkupplungsscheibe (51) mit einer ersten Nut versehen ist, in die der Rastzahn eingreift; oder
wobei der äußere Ring (61) über eine Keilverzahnung (22) mit der Drehwelle verbunden ist.

6. Getriebe nach Anspruch 4, wobei die Konuskupplung (50) eine Rückstellfeder (55) umfasst,
wobei das Getriebe ferner einen Sicherungsring (56) umfasst, der auf die Drehwelle aufgesetzt wird, wobei eine Seite des Sicherungsrings (56) in Kontakt mit dem Zielzahnrad steht, und wobei die andere Seite des Sicherungsrings (56) an der Rückstellfeder (55) anliegt.

7. Getriebe nach Anspruch 6, ferner ein Klemmfutter (23) umfassend, das auf die Drehwelle aufgesetzt wird und sich an einer von der Rückstellfeder (55) abgewandten Seite des äußeren Rings (61) befindet, wobei der Klemmfutter (23) dazu ausgelegt ist, eine axiale Verschiebung des äußeren Rings (61) zu begrenzen.

8. Getriebe nach einem der Ansprüche 3 bis 6, ferner einen Aktuator umfassend, wobei der Aktuator umfasst:
einen Motor (10), wobei ein erstes Zahnrad (101) auf einer Ausgangswelle des Motors (10) angeordnet ist;
ein zweites Zahnrad (62), das mit dem ersten Zahnrad (101) in Eingriff steht;
eine Mutter (63), wobei das zweite Zahnrad (62) auf eine Außenfläche der Mutter (63) aufgesetzt wird; und
eine Gewindestange (64), die mit einer Innenwand der Mutter (63) ein Spiralpaar bildet, wobei die Gewindestange (64) fest mit einem Gehäuse des Getriebes verbunden ist, sodass eine axiale Verschiebung der Mutter (63) einen Schub erzeugt, der direkt oder indirekt auf den äußeren Ring (61) wirkt, wenn das zweite Zahnrad (62) und die Mutter (63) durch den Motor (10) angetrieben werden, um sich relativ zur Gewindestange (64) zu drehen.

9. Getriebe nach Anspruch 8, das ferner eine erste Pufferanordnung umfasst, die zwischen der Mutter (63) des Aktuators und dem äußeren Ring (61) angeordnet ist;
wobei die erste Pufferanordnung einen radialen Positionierungsring (661), ein erstes Axiallager (331) und eine erste Federmembran (541) umfasst, die nacheinander aneinander anliegen, wobei eine vom ersten Axiallager (331) weg entfernte Seite des radialen Positionierungsrings (661) an die Mutter (63) anliegt, um eine radiale Verschiebung des ersten Axiallagers (331) zu begrenzen; und eine vom ersten Axiallager (331) weg entfernte Seite der ersten Federmembran (541) an den äußeren Ring (61) der Konuskupplung (50) an einer Seite anliegt, an der sich die erste Federmembran (541) befindet,
wobei die Anzahl der Kegelkupplung (50), des Aktuators und der ersten Pufferanordnung eine Mehrzahl und gleich ist, und wobei jede der Konuskupplungen (50) eins-zu-eins mit einem der Aktuatoren und einer der ersten Pufferanordnungen entsprechend angeordnet ist.

10. Getriebe nach Anspruch 8, wobei die Anzahl von Kegelkupplung (50) zwei beträgt, wobei sich die äußeren Ringe (61) der zwei konischen Kupplungen (50) jeweils auf beiden Seiten der Mutter (63) befinden, wobei der Motor (10) so konfiguriert ist, dass er Vorwärtsdrehmoment und Rückwärtsdrehmoment ausgibt, so dass die zwei Konuskupplungen (50) gemeinsam einen Aktuator nutzen.

11. Getriebe nach Anspruch 10, ferner umfassend:
eine erste Pufferanordnung und eine zweite Pufferanordnung, die sich jeweils an zwei axialen Seiten der Mutter (63) befinden; und
eine Anti-Lockerungsfeder (65), die in ein axiales Durchgangsloch der Mutter (63) eingesetzt ist, wobei zwei Enden der Anti-Lockerungsfeder (65) jeweils mit der ersten Pufferanordnung und der zweiten Pufferanordnung in Kontakt stehen.

12. Getriebe nach Anspruch 11, wobei die erste Pufferanordnung einen radialen Positionierungsring (661), ein erstes Axiallager (331) und eine erste Federmembran (541) umfasst, die nacheinander aneinander anliegen, wobei eine vom ersten Axiallager (331) weg entfernte Seite des radialen Positionierungsrings (661) an die Mutter (63) anliegt und gleichzeitig mit einem Ende der Anti-Lockerungsfeder (65) verbunden ist, um eine radiale Verschiebung des ersten Axiallagers (331) zu begrenzen; und wobei eine vom ersten Axiallager (331) weg entfernte Seite der ersten Federmembran (541) an den äußeren Ring (61) der Konuskupplung (50) an einer Seite anliegt, an der sich die erste Federmembran (541) befindet.

13. Getriebe nach Anspruch 11, wobei die zweite Pufferanordnung ein zweites Axiallager (332), eine Unterlagescheibe (662), einen Übergangsring (67), ein drittes Axiallager (333) und eine zweite Federmembran (542) umfasst, die nacheinander entlang der Axialrichtung der Drehwelle aneinander anliegen, wobei eine Endfläche einer von der Unterlagescheibe (662) weg entfernten Seite des zweiten Axiallagers (332) mit der Anti-Lockerungsfeder (65) verbunden ist, wobei eine von dem Übergangsring (67) weg entfernte Seite der zweiten Federmembran (542) an den äußeren Ring (61) der Konuskupplung (50) an einer Seite anliegt, an der sich die zweite Federmembran (542) befindet,
wobei an einer von der ersten Pufferanordnung weg entfernten Endfläche der Mutter (63) eine zweite Nut (651) vorgesehen ist, die auch radial durch die äußere Ringfläche der Mutter (63) durchdringt;
wobei sowohl das zweite Axiallager (332) als auch die Unterlagescheibe (662) auf die zweite Nut (651) aufgesetzt werden und mit einer Bodenfläche in radialer Richtung der zweiten Nut (651) in Eingriff sind;
wobei ein erster Vorsprung (672) und ein zweiter Vorsprung (673) an zwei Seiten des Übergangsrings (67) in axialer Richtung des Übergangsrings angeordnet sind, wobei der erste Vorsprung (672) mit einer Umfangsfläche der Unterlagescheibe (662) in Eingriff ist, um eine radiale Verschiebung des Übergangsrings (67) zu begrenzen, und wobei der zweite Vorsprung (673) mit einer Umfangsfläche des dritten Axiallagers (333) in Eingriff ist, um eine radiale Verschiebung des dritten Axiallagers (333) zu begrenzen.

14. Getriebe nach Anspruch 8, wobei die Gewindestange (64) eine Vielzahl von Verbindungsarmen (641) umfasst, wobei jeder der Verbindungsarme (641) fest mit dem Gehäuse des Getriebes verbunden ist,
wobei die Vielzahl von Verbindungsarmen (641) gleichmäßig in Umfangsrichtung der Gewindestange (64) angeordnet ist, und wobei jeder der Verbindungsarme (641) in radialer Richtung der Gewindestange (64) hervorragt.

## Revendications

1. Un embrayage conique (50), comprenant :
Un anneau conique central (53), dont la surface intérieure et la surface extérieure sont toutes deux des surfaces coniques ;
Un anneau conique intérieur (52), disposé à l'intérieur dudit anneau conique central (53), la surface extérieure dudit anneau conique intérieur (52) étant une surface conique correspondant à la surface intérieure dudit anneau conique central (53) ; ainsi que
Une bague extérieure (61), présentant une surface annulaire conique s'ajustant à la surface extérieure dudit anneau conique central (53). Ladite bague extérieure (61) peut se déplacer axialement le long de la surface annulaire conique par rapport au dit anneau conique intérieur (52). Ledit anneau conique central (53) et ladite bague extérieure (61) sont respectivement destinés à être reliés à deux pièces à assembler. Ledit embrayage conique (50) est configuré de manière à ce que, lorsque ladite bague extérieure (61) est soumise à une force de poussée la rapprochant dudit anneau conique central (53), des paires de frottement en contact étroit soient formées entre ladite bague extérieure (61) et ledit anneau conique central (53) ainsi qu'entre ledit anneau conique central (53) et ledit anneau conique intérieur (52), afin d'assembler lesdites deux pièces à assembler. Il est **caractérisé en ce que**
Ledit embrayage conique (50) comprend également le ressort de rappel (55), une extrémité dudit ressort de rappel (55) étant fixée, et l'autre extrémité dudit ressort de rappel (55) étant reliée à ladite bague extérieure (61).

2. Un variateur de vitesse, comprenant un arbre rotatif, un pignon cible et ledit embrayage conique (50) décrit dans la revendication 1. Ledit pignon cible est enfilé sur ledit arbre rotatif et peut tourner par rapport au dit arbre rotatif. Ledit embrayage conique (50) est utilisé pour assembler ou désassembler ledit arbre rotatif et ledit pignon cible.

3. Selon ledit variateur de vitesse décrit dans la revendication 2, dans lequel
ledit pignon cible est disposé au niveau dudit arbre rotatif au moyen du palier de support (32).

4. Selon ledit variateur de vitesse dans la revendication 2, comprenant également :
Un disque de liaison d'engrenage (51), solidarisé avec ledit pignon cible et relié de manière à empêcher la rotation relative avec ledit anneau conique central (53) ;
Ladite bague extérieure (61) est enfilée sur ledit arbre rotatif et les deux forment un lien empêchant la rotation relative.

5. Selon ledit variateur de vitesse décrit dans la revendication 4, dans lequel
Le côté dudit anneau conique central (53) proche de ladite disque de liaison d'engrenage (51) est muni de dents saillantes s'étendant axialement, et ladite disque de liaison d'engrenage (51) est pourvu d'une première rainure coopérant avec les dents saillantes ; ou
Ladite bague extérieure (61) est reliée à ledit arbre rotatif au moyen d'un clavetage (22).

6. Selon ledit variateur de vitesse dans la revendication 4, ledit embrayage conique (50) comprend un ressort de rappel (55). Dans lequel, ledit variateur de vitesse comprend également :
Une bague de retenue (56), enfilée sur ledit arbre rotatif, dont un côté est en contact avec ledit pignon cible et l'autre côté vient en butée contre ledit ressort de rappel (55).

7. Selon ledit variateur de vitesse décrit dans la revendication 6, comprenant également :
Un ressort circlips (23), enfilé sur ledit arbre rotatif et situé du côté de ladite bague extérieure (61) éloigné dudit ressort de rappel (55), et servant à limiter le déplacement axial de ladite bague extérieure (61).

8. Selon ledit variateur de vitesse décrit dans l'une quelconque des revendications 3 à 6, comprenant également un actionneur, ledit actionneur comprenant :
Un moteur (10), sur l'arbre de sortie duquel est monté un premier engrenage (101) ;
Un deuxième engrenage (62), engrené avec ledit premier engrenage (101) ;
Un écrou (63), sur la surface extérieure duquel est enfilé ledit deuxième engrenage (62) ; ainsi que
une vis (64), formant un couple hélicoïdal avec la paroi intérieure de ladite écrou (63). Ladite vis (64) est relié de manière fixe au boîtier dudit variateur de vitesse, de sorte que lorsque ledit moteur (10) entraîne la rotation dudit deuxième pignon (62) et de ladite écrou (63) par rapport à ladite vis (64), ladite écrou (63) génère un déplacement axial pour produire une force de poussée agissant directement ou indirectement sur ladite bague extérieure (61).

9. Selon ledit variateur de vitesse décrit dans la revendication 8, il comprend également un premier ensemble amortisseur disposé entre ladite écrou (63) desdits actionneurs et ladite bague extérieure (61) ;
Ledit premier ensemble amortisseur comprend une bague de positionnement radial (661), un premier roulement à butée (331) et une première membrane à ressort (541) qui sont en appui successif. Le côté de ladite bague de positionnement radial (661) éloigné dudit premier roulement à butée (331) est en appui contre ladite écrou (63) et sert à limiter le déplacement radial dudit premier roulement à butée (331). Le côté de ladite première membrane à ressort (541) éloigné dudit premier roulement à butée (331) est en appui contre ladite bague extérieure (61) dudit embrayage conique (50) du même côté que lui,
le nombre desdits embrayages coniques (50), lesdits actionneurs et desdits premiers ensembles amortisseurs est identique et tous sont en nombre multiple. Et chacun desdits embrayages coniques (50) est disposé en correspondance avec ledit actionneur et ledit premier ensemble amortisseur.

10. Selon ledit variateur de vitesse décrit dans la revendication 8, dans lequel
le nombre desdits embrayages coniques (50) est de 2. Les bagues extérieures (61) des 2 lesdits embrayages coniques (50) sont respectivement situées des deux côtés de ladite écrou (63). Ledit moteur (10) est utilisé pour délivrer un couple de rotation dans les sens direct et inverse, de sorte que les deux lesdits embrayages coniques (50) partagent ledit même actionneur.

11. Selon ledit variateur de vitesse décrit dans la revendication 10, comprenant également :
Un premier ensemble amortisseur et un deuxième ensemble amortisseur, respectivement situés des deux côtés axiaux de ladite écrou (63) ; ainsi que
un ressort anti-désassemblage (65), traversant le trou axial de ladite écrou (63), les deux extrémités dudit ressort anti-désassemblage (65) étant respectivement en appui contre ledit premier ensemble amortisseur et ledit deuxième ensemble amortisseur.

12. Selon ledit variateur de vitesse décrit dans la revendication 11, dans lequel
ledit premier ensemble amortisseur comprend ladite bague de positionnement radial (661), un premier roulement à butée (331) et une première membrane à ressort (541) qui sont en appui successif. Le côté de ladite bague de positionnement radial (661) éloigné dudit premier roulement à butée (331) est en appui contre ladite écrou (63) et est également relié à une extrémité dudit ressort anti-désassemblage (65), servant à limiter le déplacement radial dudit premier roulement à butée (331). Le côté de ladite première membrane à ressort (541) éloigné dudit premier roulement à butée (331) est en appui contre ladite bague extérieure (61) dudit embrayage conique (50) du même côté que lui.

13. Selon ledit variateur de vitesse décrit dans la revendication 11, dans lequel
ledit deuxième ensemble amortisseur comprend un deuxième roulement à butée (332), une rondelle (662), une bague de transition (67), un troisième roulement à butée (333) et une deuxième membrane à ressort (542) qui sont en appui successif dans le sens axial de l'arbre rotatif. La face d'extrémité dudit deuxième roulement à butée (332) éloignée de ladite rondelle (662) est reliée au dit ressort anti-désassemblage (65). La face d'extrémité de ladite deuxième membrane à ressort (542) éloignée de ladite bague de transition (67) est en appui contre ladite bague extérieure (61) dudit embrayage conique (50) du même côté que elle,
sur la face d'extrémité de ladite écrou (63) éloignée dudit premier ensemble amortisseur est ménagée une deuxième rainure (651). Ladite deuxième rainure (651) traverse également radialement la surface extérieure de ladite écrou (63) ;
Ledite deuxième roulement à butée (332) et ladite rondelle (662) sont tous deux enfilés au niveau de ladite deuxième rainure (651) et coopèrent tous deux avec la face inférieure de ladite deuxième rainure (651) dans le sens radial,
les deux côtés axiaux de ladite bague de transition (67) sont respectivement munis d'un premier bossage (672) et d'un deuxième bossage (673). Ledit premier bossage (672) coopère avec la surface périphérique de ladite rondelle (662) pour limiter le déplacement radial de ladite bague de transition (67). Ledit deuxième bossage (673) coopère avec la surface périphérique dudit troisième roulement à butée (333) pour limiter le déplacement radial dudit troisième roulement à butée (333).

14. Selon ledit variateur de vitesse décrit dans la revendication 8, dans lequel
ladite vis (64) comprend plusieurs bras de liaison (641). Chacun desdits bras de liaison (641) est relié de manière fixe au boîtier dudit variateur de vitesse.
Plusieurs desdits bras de liaison (641) sont répartis de manière uniforme dans la circonférence de ladite vis (64) et chacun desdits bras de liaison (641) s'étend dans le sens radial de ladite vis (64).
